# EUROPÄISCHE PATENTANMELDUNG

(11) **EP 0 867 344 A2**
(43) Veröffentlichungstag der Anmeldung: **30.09.1998**
(21) Anmeldenummer: 98103666.8
(22) Anmeldetag: 03.03.1998
(51) Int. Cl.: B60R 16/06

(54) **Anordnung zur Ableitung elektrostatischer Aufladungen**

(30) Priorität: 27.03.1997 DE 19712962
(71) Anmelder: Bayerische Motoren Werke Aktiengesellschaft, 80788 München (DE)
(72) Erfinder: Hofmann, Jörg, 09212 Limbach/Oberfrohna (DE); Flechtner, Horst, 85748 Garching (DE); Heyken, Reent, 80937 München (DE); Schmidt, Hans, 85716 Unterschliessheim (DE)

(57) **Zusammenfassung**

Zur Ableitung elektrostatischer Aufladungen aus dem Radbereich eines Fahrzeuges ist ein elektrisch leitender Bremsschlauch (1) vorgesehen, der eine Verbindung zur Bremsanlage des Fahrzeugs herstellt, die ihrerseits leitend mit der Karosserie des Fahrzeugs verbunden ist.

## Beschreibung

Die Erfindung bezieht sich auf eine Anordnung zur Ableitung elektrostatischer Aufladungen aus dem Radbereich eines Fahrzeugs sowie auf Mittel zur Realisierung dieser Anordnung.

Aus der US-A-5,021,918 ist eine Vorrichtung zur Ableitung elektrostatischer Aufladungen aus dem Nabenbereich eines Fahrzeugrades bekannt. Die elektrostatische Aufladung erfolgt vor allem durch Berührungselastizität und Walkarbeit der Reifen während der Fahrt. Eine Feder, die mit der rotierenden Nabe des Rades verbunden ist, drückt auf den Radträger und überbrückt somit das Radlager. Hiermit wird eine stetige Entladung sichergestellt, um Störungen des Radioempfangs im Fahrzeug infolge von Funkenentladungen entgegenzuwirken.

Durch die bekannte Lösung wird das mit einem Schmierstoff versehene Radlager überbrückt. Eine sichere Ableitung der elektrischen Ladung vom Radträger und damit weiteren Fahrwerksteilen auf die Karosserie ist jedoch insbesondere bei der Vorderachse von Personenkraftwagen nicht gegeben, da die Fahrwerksteile in Gummielementen gelagert sind. Somit erfolgt mit zunehmender Aufladung der Fahrwerksteile bei Überschreitung einer Grenzspannung ein Überschlag auf das nächstgelegene elektrisch leitfähige Teil. Insbesondere durch Überschläge im Bereich von Verbindungsleitungen zwischen elektrischen Sensoren und elektronischen Steuergeräten können Störsignale in die Fahrzeugelektrik eingebracht werden. Aus diesem Grund ist beispielsweise bei den Fahrzeugen der aktuellen 3er-Baureihe der BMW AG ein Massekabel zwischen Radträger und ABS-Steuergerät vorgesehen, wodurch allerdings zusätzliche Kosten entstehen.

Aufgabe der Erfindung ist es, eine kostengünstige Anordnung zur sicheren Ableitung elektrostatischer Aufladungen sowie Mittel zur Realisierung dieser Anordnung aufzuzeigen.

Diese Aufgabe wird durch die Merkmale des Anspruchs 1 gelöst. Die Ansprüche 2, 3 und 5 beschreiben Bremsschläuche, mit denen die erfindungsgemäße Anordnung realisiert werden kann.

Der Kerngedanke der Erfindung besteht darin, aus der Vielzahl der möglichen Stromwege zwischen dem Radträger und der Karosserie des Fahrzeugs den Strompfad 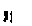 Radträger - Bremssattel - Bremsschlauch - Bremssystem - Karosserie" zur Ableitung der elektrischen Ladung zu verwenden und hierzu den üblicherweise elektrisch nicht leitenden ßremsschlauch elektrisch leitfähig auszugestalten. Durch den elektrisch leitenden Bremsschlauch ist in einfacher Weise, ohne die Notwendigkeit eines zusätzlichen Bauteils, wie beispielsweise eines separaten Kabels, eine Verbindung zwischen dem metallischen Bremssattel (und damit dem Radträger) und metallischen Teilen des Bremssystems (Bremsleitung bzw. Bremsgerät, die ihrerseits wiederum leitend mit der Karosserie verbunden sind) gegeben. Die erfindungsgemäße Lösung zeichnet sich durch besonders niedrige Zusatzkosten und geringen zusätzlichen Materialaufwand aus. Sie ermöglicht eine sichere und verschleißfreie elektrische Anbindung des Radträgers an die Karosserie. Dies ist insbesondere bei den Rädern einer lenkbaren, nicht angetriebenen Achse, bei der die bewegten Teile in nicht oder schlecht leitenden Gummielementen gelagert sind, von Bedeutung.

Mögliche Ausgestaltungen elektrisch leitender Bremsschläuche zur Realisierung der erfindungsgemäßen Anordnung sind in den Ansprüchen 2 bis 6 beschrieben.

Gemäß Anspruch 2 wird die Leitfähigkeit des Bremsschlauches durch einen elektrischen Leiter hergestellt, der in kostengünstiger Weise bereits bei der Herstellung des Bremsschlauches in die Schlauchwandungen integriert wird und hierdurch vor äußeren Einflüssen geschützt ist.

Alternativ bzw. zusätzlich kann gemäß Anspruch 3 das elastomere Material des Bremsschlauches selbst leitend ausgebildet sein, beispielsweise indem der Elastomerwerkstoff des Bremsschlauches mit leitfähigen Füllstoffen versehen ist.

Bei der bevorzugten Ausführung der Erfindung nach Anspruch 4 bewerkstelligt das elektrisch leitende Elastomermaterial des Bremsschlauches den Ladungsübergang vom metallischen Anschlußstück des Bremsschlauches auf die innenliegende, mechanisch hoch beanspruchbare Tragschicht des Bremsschlauches. Diese Tragschicht kann, wie beispielsweise aus der GB-PS-1 511 630 bekannt, aus einer oder mehreren Lagen eines schraubenförmig gewickelten metallischen Drahtes bestehen.
Alternativ kann die Tragschicht auch von einer oder mehreren Gewebelagen aus einem elektrisch leitfähigen Garn bestehen.
Eine weitere Möglichkeit besteht darin, die Gewebelage aus einem textilen Material oder einem Kunststoffgarn auszubilden, wobei ein Faden oder wenige einzelne Fäden der Gewebelage durch einen elektrischen Leiter mit geringem ohmschen Widerstand ersetzt sind. Ebenso kann eine nicht leitende Tragschicht mit einem metallischen Leiter umwickelt werden. In allen Fällen gewährleistet der eingewobene oder zusätzliche Leiter eine ausreichende Ableitung der elektrischen Ladung. Gleichzeitig ist eine deutlich bessere akustische Entkopplung gegenüber den aus der GB-PS bekannten Bremsschläuchen gegeben, da die Gewebelage Körperschall deutlich stärker bedämpft als dies bei Bremsschläuchen mit ausschließlich metallischer Armierung der Fall ist.

Ein in das Innere des Bremsschlauches eingesetzter elektrischer Leiter (Anspruch 5) stellt auf einfache Weise, auch nachträglich, die elektrische Leitfähigkeit her. Durch das Verpressen des elektrischen Leiters mit dem Anschlußstück gemäß Anspruch 6 steht ein einbaufertig konfektionierter, elektrisch leitender Bremsschlauch zur Verfügung.

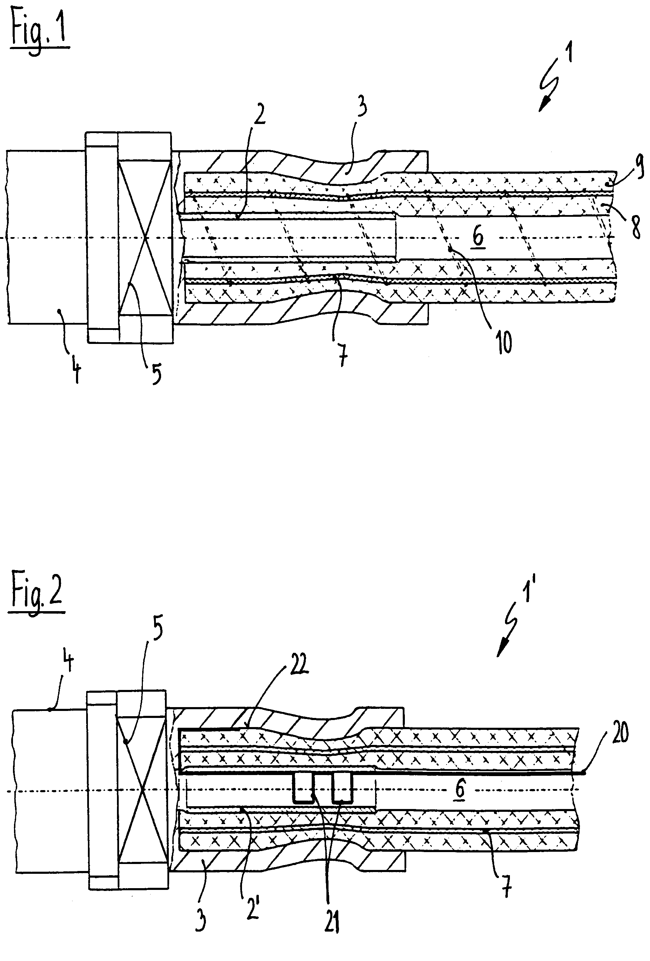

Zwei mögliche Ausführungsbeispiele der Erfindung sind in der Zeichnung dargestellt und nachfolgend näher erläutert. Die Figuren 1 und 2 zeigen jeweils einen Endabschnitt erfindungsgemäßer Bremsschläuche in teilweiser Schnittdarstellung.

Der Endabschnitt eines Bremsschlauches 1 ist auf einen Rohrnippel 2 aufgesteckt und über eine Preßhülse 3 gas- bzw. flüssigkeitsdicht mit diesem verbunden. Der bremsschlauchabgewandte Abschnitt (nicht dargestellt) des Rohrnippels 2 trägt ein Gewinde zum Anschluß an eine Radbremse bzw. an eine Bremsleitung oder ein Bremsgerät. Der Rohrnippel 2 wird über eine Armatur 4 mit Ansatzflächen 5 für ein Werkzeug in ein entsprechendes Gegengewinde eingeschraubt.

Der Bremsschlauch 1, in dessen zylindrischem Hohlraum 6 ein gasförmiges oder flüssiges Medium zur Weiterleitung des Bremsdruckes aufgenommen wird, besteht aus einem zylindrischen Tragkörper 7, der mit einer inneren und einer äußeren Ummantelung 8 bzw. 9 aus einem Elastomerwerkstoff versehen ist. Der Tragkörper 7 setzt sich aus einer oder mehreren Lagen eines textilen Fadens bzw. eines Kunststoffadens zusammen. Über die Gewebelagen des Tragkörpers 7 ist ein elektrischer Leiter 10 gewickelt, der sich schraubenförmig entlang des Tragkörpers 7 erstreckt. Dieser elektrische Leiter 10, der über der Längserstreckung des Bremsschlauches 1 die elektrische Leitfähigkeit sicherstellt, besteht aus einem elektrisch gut leitendem Material, z. B. Kupfer. Auch die Ummantelung 8 ist elektrisch leitfähig, zumindest im Bereich des Rohrnippels 2. Da im Bereich des Rohrnippels 2 in radialer Richtung nur eine geringe Distanz zu überbrücken ist, reicht hier bereits eine relativ geringe Leitfähigkeit aus. So werden beispielsweise mit Elastomerwerkstoffen mit einem spezifischen Widerstand von ca. 10³ bis 10⁵ Ωcm gute Ergebnisse erzielt.

Alternativ zur Ausführungsform gemäß Figur 1 kann der gesamte Tragkörper 7 aus elektrisch leitenden Material, beispielsweise einem Metalldraht oder einem elektrisch leitendem Garn, bestehen.

Figur 2 zeigt ein zweites Ausführungsbeispiel der Erfindung. Hierbei sind gleiche oder gleichwirkende Teile mit denselben Bezugszahlen wie in Figur 1 bezeichnet.

Die elektrische Leitfähigkeit wird durch einen elektrischen Leiter 20 hergestellt, der im Hohlraum 6 des Bremsschlauches 1' angeordnet ist. Wegen der Beweglichkeit des Bremsschlauches 1' und aufgrund von Längenänderungen des Bremsschlauches 1' bei Druckänderungen ist ein Längenausgleich in Form zweier mäanderförmiger Drahtschleifen 21 vorgesehen.

Anstelle des Rohrnippels 2 im ersten Ausführungsbeispiel ist gemäß Figur 2 eine lose, nicht direkt mit der Armatur 4 verbundene Stützhülse 2 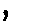 vorgesehen. Zur Konfiguration des Bremsschlauches 1' wird zunächst die Stützhülse 2 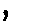 in den Bremsschlauch 1 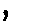 eingesetzt. Anschließend wird der elektrische Leiter 20 durch den Schlauch 1 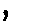 und die Stützhülse 2 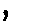 bis auf die Außenseite 22 des Bremsschlauches 1' durchgeführt. Nach dem Aufschieben der Preßhülse 3, die mit der Armatur 4 verbunden ist, wird die Preßhülse 3 zur Herstellung einer belastbaren und flüssigkeitsdichten Verbindung mit dem Bremsschlauch 1 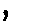 verpreßt, wodurch der Leiter 20 fixiert und eine sichere elektrische Verbindung zwischen dem Leiter 20 und der Preßhülse 3 (und damit der Armatur 4, die ihrerseits leitend mit der Bremsanlage des Fahrzeugs verbunden ist) hergestellt wird.

## Patentansprüche

1. Anordnung zur Ableitung elektrostatischer Aufladungen aus dem Radbereich eines Fahrzeugs,
dadurch gekennzeichnet, daß zwischen der Radbremse und einer mit der Karosserie des Fahrzeugs elektrisch leitend verbundenen Komponente der Bremsanlage des Fahrzeugs ein elektrisch leitender Bremsschlauch (1) angeordnet ist.

2. Bremsschlauch zur Anbindung einer Radbremse an eine Bremsanlage,
dadurch gekennzeichnet, daß die Wandung des Bremsschlauches (1) eine elektrisch leitende Einlage (10) aufweist.

3. Bremsschlauch zur Anbindung einer Radbremse an eine Bremsanlage, insbesondere nach Anspruch 2,
dadurch gekennzeichnet, daß die Wandung des Bremsschlauches (1) zumindest teilweise von einem elektrisch leitenden Elastomerwerkstoff (8) gebildet wird.

4. Bremsschlauch nach einem der vorangegangenen Ansprüche,
dadurch gekennzeichnet, daß der Bremsschlauch (1) einen schlauchförmigen Tragkörper (7) hoher elektrischer Leitfähigkeit aufweist, der von wenigstens einer Schicht (8, 9) eines Elastomerwerkstoffs umgeben ist und an seinen Endabschnitten jeweils mit einem elektrisch leitenden Anschlußstück (2) versehen ist, wobei der Elastomerwerkstoff (8) zumindest im Bereich der Anschlußstücke (2) elektrisch leitfähig ist.

5. Bremsschlauch zur Anbindung einer Radbremse an eine Bremsanlage,
dadurch gekennzeichnet, daß durch das Innere (6) des Bremsschlauches (1') ein elektrischer Leiter (20) hindurchgeführt ist.

6. Bremsschlauch nach Anspruch 5,
dadurch gekennzeichnet, daß der elektrische Leiter (20) mit einem elektrisch leitenden Anschlußstück (2, 3, 4) am Endabschnitt des Bremsschlauches (1') verpreßt ist.
